# EUROPEAN PATENT SPECIFICATION

(11) **EP 3 036 615 B1**
(45) Date of publication and mention of the grant of the patent: **01.01.2020**
(21) Application number: 14759387.5
(22) Date of filing: 18.08.2014
(51) Int. Cl.: G06F 3/0488, G06F 3/0482, G06F 3/0484, G06F 3/0486

(54) **DYNAMIC CONTEXTUAL MENU FOR TOUCH-SENSITIVE DEVICES**
DYNAMISCHES KONTEXTMENÜ FÜR BERÜHRUNGSEMPFINDLICHE GERÄTE
MENU CONTEXTUEL DYNAMIQUE POUR DES APPAREILS TACTILES

(30) Priority: 23.08.2013 US 201313974088
(43) Date of publication of application: 29.06.2016
(73) Proprietor: General Electric Company, Schenectady, NY 12345 (US)
(72) Inventor: JOHN, Justin Varkey, Schenectady, NY 12345 (US); GRUBBS, Robert William, Salem, VA 24153 (US)
(74) Representative: BRP Renaud & Partner mbB Rechtsanwälte Patentanwälte Steuerberater
(86) International application number: PCT/US2014/051400
(87) International publication number: WO 2015/026682

(56) References cited:
- US-A1- 2007 050 731
- US-A1- 2013 019 182

## Description

### BACKGROUND OF THE INVENTION

The subject matter disclosed herein relates to human-machine interfaces, and more particularly, to dynamic contextual touch menus, as described, e.g., in US 2013/0019182 A2.

Furthermore, US 2007/0050731 A1 provides relevant background on dynamically changing menus.

Multi-touch user interfaces often suffer from low information density, as it is difficult to balance ease of use for a touch device with a large number of user interface (UI) elements. This holds particularly true in control systems, where human-machine interfaces (HMIs) for industrial control software are very rich in detailed information. Progressive disclosure patterns, such as popup or context menus, collapse/expand panels, and semantic zoom, selectively provide and hide access to underlying information. UI elements in a pointer-based environment may not translate well into a multi-touch environment. The term "pointer-based", as used herein, refers to environments using a movable onscreen pointer or cursor and may include mice, trackballs, touchpads, pointing sticks, joysticks, and the like, where the input device and display device are separate elements. A multi-touch device can recognize the presence of two or more points of contact on a touch-sensitive surface.

As one example, a typical activation gesture in a multi-touch environment for a popup menu is a "tap hold" operation that can be uncomfortable and time consuming. Another common mouse UI element in engineering tools is a property grid, which provides an information dense UI control with poor usability on multi-touch devices. "Tooltips" are commonly used in pointer-based HMIs and engineering tools to provide details about an element of the UI when a pointer hovers over the element; however, in a multi-touch environment without hover events, the use of tooltips is not possible.

### BRIEF DESCRIPTION OF THE INVENTION

The invention is defined on basis of the independent claims.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 depicts an exemplary embodiment of a control system environment;
FIG. 2 depicts an exemplary embodiment of a computing system;
FIG. 3 depicts an example of a user interface;
FIG. 4 depicts an example of a dynamic contextual touch menu on the user interface of FIG. 3;
FIG. 5 depicts an example of dynamic contextual touch menu modification on the user interface of FIG. 3;
FIG. 6 depicts an example of a user interface;
FIG. 7 depicts an example of a first dynamic contextual touch menu on the user interface of FIG. 6;
FIG. 8 depicts an example of multiple dynamic contextual touch menus on the user interface of FIG. 6;
FIG. 9 depicts another example of multiple dynamic contextual touch menus on the user interface of FIG. 6;
FIGS. 10-12 depict detailed views of the dynamic contextual touch menus of FIGS. 6-9; and
FIG. 13 depicts a process for providing dynamic contextual touch menus in accordance with exemplary embodiments.
The detailed description explains embodiments of the invention, together with advantages and features, by way of example with reference to the drawings.

### DETAILED DESCRIPTION OF THE INVENTION

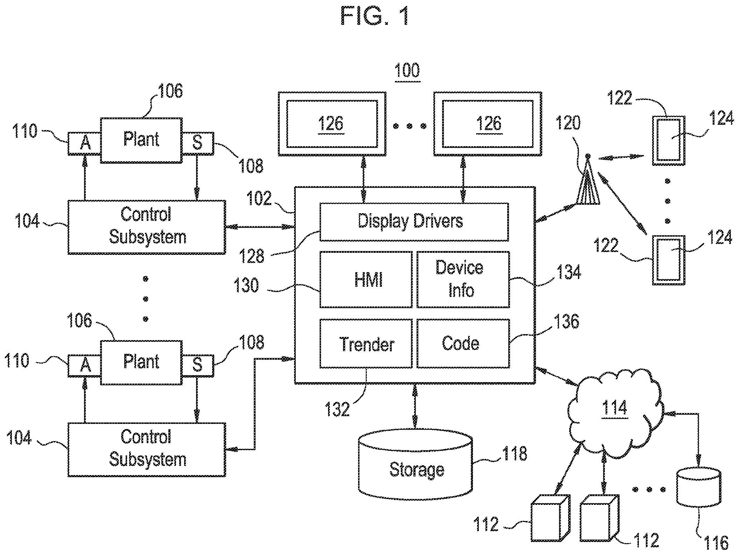

FIG. 1 illustrates an exemplary control system environment 100 for accessing, controlling, and monitoring a number of control system assets. For illustrative purposes a power plant is described herein. It will be appreciated that the systems and methods described herein can be applied to any type of environment that includes a multi-touch display computer system.

In the example of FIG. 1, a control system framework 102 interfaces with a plurality of control subsystems 104. Each of the control subsystems 104 controls a plant 106 through a combination of sensors 108 and actuators 110. The term "plant" is used generically to describe a device, machine, or subsystem being controlled. Each plant 106 may itself be a system that includes a number of subsystems. For example, the plant 106 may include a gas turbine engine (not depicted) with sensors 108 and actuators 110 distributed between a generator subsystem, an inlet subsystem, a compressor subsystem, a fuel subsystem, and a combustion subsystem of the gas turbine engine. Alternatively, each plant 106 can be any type of machine in an industrial control system. The control subsystems 104 may be configured in a hierarchy of multiple levels to perform operations across multiple subsystems or target particular devices.

The control system framework 102 may interface to various processing systems 112 via a network 114. The network 114 may also interface to one or more remote data storage systems 116. A local data storage system 118, which can include fixed or removable media, may be accessible to or integrated with the control system framework 102. A wireless interface 120 can enable wireless access to the control system framework 102 by one or more mobile devices 122. In exemplary embodiments, the mobile devices 122 respectively include multi-touch displays 124 that enable touchscreen-based navigation and control of elements within the control system framework 102. The wireless interface 120 may be part of the network 114 or be separately implemented.

The control system framework 102 can also or alternatively interface locally to one or more multi-touch displays 126 via display drivers 128. The multi-touch displays 126 can be large form factor displays, i.e., non-mobile device displays. For example, the multi-touch displays 126 can be mounted vertically or horizontally to a support structure or integrated within a support structure, such as a touch-sensitive computer table surface. The display drivers 128 produce a variety of interactive user interfaces to support access, control, monitoring, and troubleshooting of the control subsystems 104.

The control system framework 102 can also include a number of additional features, such as a human-machine interface (HMI) 130, a trender 132, a device information module 134, and a code module 136. The HMI 130 may provide direct control and monitoring of the control subsystems 104. The trender 132 can monitor, log, and display data from the sensors 108, system status, and various derived signals from the control subsystems 104. The trender 132 may store recorded data locally in the local data storage system 118 for logging and analyzing recent events, while long-term data can be stored to and extracted from the one or more remote data storage systems 116. The device information module 134 can identify, display and edit information associated with selected devices. The device information module 134 may access the remote and/or local data storage systems 116 and 118 for device data. Device data that may be accessed by the device information module 134 can include properties, configurable parameters, data sheets, inventory information, troubleshooting guides, maintenance information, alarms, notifications, and the like. The code module 136 can display underlying code used to design and interface with other modules such as the HMI 130. The code module 136 can access underlying code stored on the remote and/or local data storage systems 116 and 118, and display the code in a graphical format to further assist with troubleshooting of problems within the control system environment 100.

Although a number of features are depicted as part of the control system environment 100 and the control system framework 102, it will be understood that various modules can be added or removed within the scope of various embodiments. For example, the wireless interface 120 can be omitted where the mobile devices 122 are not supported. The code module 136 can be omitted where the underlying code is not made visible to users of the control system framework 102. Additionally, user accounts can be configured with different levels of permissions to view, access, and modify elements and features within the control system framework 102. For example, a user may only be given access to the trender 132 and/or the device information module 134 to support analysis and troubleshooting while blocking access to change states of parameters of the control subsystems 104.

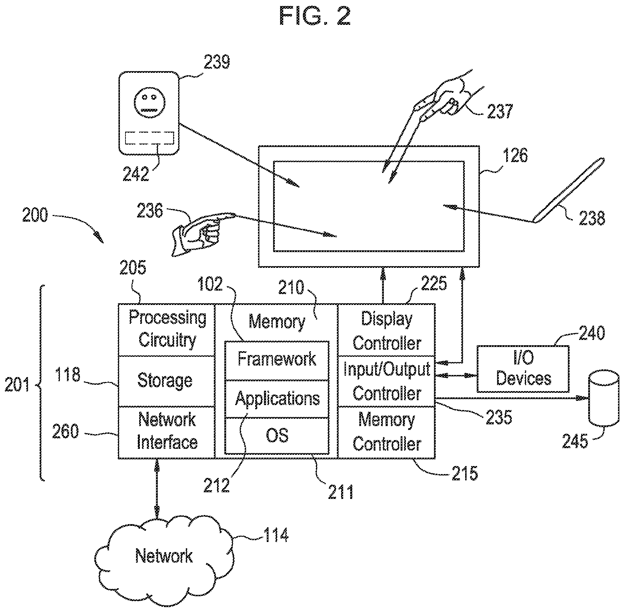

FIG. 2 illustrates an exemplary embodiment of a multi-touch computing system 200 that can be implemented as a computing device for providing dynamic contextual touch menus described herein. The methods described herein can be implemented in software (e.g., firmware), hardware, or a combination thereof. In exemplary embodiments, the methods described herein are implemented in software, as one or more executable programs, and executed by a special or general-purpose digital computer, such as a personal computer, mobile device, workstation, minicomputer, or mainframe computer operably coupled to or integrated with a multi-touch display. The system 200 therefore includes a processing system 201 interfaced to at least one multi-touch display 126. In a mobile device embodiment, a multi-touch display 124 of FIG. 1 can be substituted for or used in conjunction with the multi-touch display 126 of FIG. 2.

In exemplary embodiments, in terms of hardware architecture, as shown in FIG. 2, the processing system 201 includes processing circuitry 205, memory 210 coupled to a memory controller 215, and one or more input and/or output (I/O) devices 240, 245 (or peripherals) that are communicatively coupled via a local input/output controller 235. The input/output controller 235 can be, but is not limited to, one or more buses or other wired or wireless connections, as is known in the art. The input/output controller 235 may have additional elements, which are omitted for simplicity, such as controllers, buffers (caches), drivers, repeaters, and receivers, to enable communications. Further, the input/output controller 235 may include address, control, and/or data connections to enable appropriate communications among the aforementioned components. The processing system 201 can further include a display controller 225 coupled to the multi-touch display 126. The display controller 225 may drive output to be rendered on the multi-touch display 126.

The processing circuitry 205 is hardware for executing software, particularly software stored in memory 210. The processing circuitry 205 can include any custom made or commercially available processor, a central processing unit (CPU), an auxiliary processor among several processors associated with the processing system 201, a semiconductor based microprocessor (in the form of a microchip or chip set), a macroprocessor, or generally any device for executing software instructions.

The memory 210 can include any one or combination of volatile memory elements (e.g., random access memory (RAM, such as DRAM, SRAM, SDRAM, etc.)) and nonvolatile memory elements (e.g., ROM, erasable programmable read only memory (EPROM), electronically erasable programmable read only memory (EEPROM), flash memory, memory card, programmable read only memory (PROM), tape, compact disc read only memory (CD-ROM), digital versatile disc (DVD), disk, diskette, cartridge, cassette or the like, etc.). Moreover, the memory 210 may incorporate electronic, magnetic, optical, and/or other types of storage media. The memory 210 can have a distributed architecture, where various components are situated remote from one another but can be accessed by the processing circuitry 205.

Software in memory 210 may include one or more separate programs, each of which includes an ordered listing of executable instructions for implementing logical functions. In the example of FIG. 2, the software in memory 210 includes the control system framework 102 of FIG. 1, a suitable operating system (OS) 211, and various other applications 212. The OS 211 essentially controls the execution of computer programs, such as various modules as described herein, and provides scheduling, input-output control, file and data management, memory management, communication control and related services. Dynamic contextual touch menus can be provided by the OS 211, the control system framework 102, the other applications 212, or a combination thereof.

The control system framework 102 as described herein may be implemented in the form of a source program, executable program (object code), script, or any other entity comprising a set of instructions to be performed. When a source program, then the program may be translated via a compiler, assembler, interpreter, or the like, which may or may not be included within the memory 210, so as to operate properly in conjunction with the OS 211. Furthermore, the control system framework 102 can be written in an object oriented programming language, which has classes of data and methods, or a procedure programming language, which has routines, subroutines, and/or functions.

The input/output controller 235 receives touch-based inputs from the multi-touch display 126 as detected touches, gestures, and/or movements. The multi-touch display 126 can detect input from one finger 236, multiple fingers 237, a stylus 238, and/or another physical object 239. Multiple inputs can be received contemporaneously or sequentially from one or more users. The multi-touch display 126 may also support physical object recognition using, for instance, one or more scannable code labels 242 on each physical object 239. In one example, the multi-touch display 126 includes infrared (IR) sensing capabilities to detect touches, shapes, and/or scannable code labels. Physical object 239 may be, for instance, a user identification card having an associated IR-detectable pattern for the user as one or more scannable code labels 242 to support login operations or user account and permissions configuration.

Other output devices such as the I/O devices 240, 245 may include input or output devices, for example but not limited to a printer, a scanner, a microphone, speakers, a secondary display, and the like. The I/O devices 240, 245 may further include devices that communicate both inputs and outputs, for instance but not limited to, components of the wireless interface 120 of FIG. 1 such as a network interface card (NIC) or modulator/demodulator (for accessing other files, devices, systems, or a network), a radio frequency (RF) or other transceiver, a telephonic interface, a bridge, a router, a mobile device, a portable memory storage device, and the like.

In exemplary embodiments, the system 200 can further include a network interface 260 for coupling to the network 114. The network 114 can be an internet protocol (IP)-based network for communication between the processing system 201 and any external server, client and the like via a broadband connection. The network 114 transmits and receives data between the processing system 201 and external systems. In exemplary embodiments, network 114 can be a managed IP network administered by a service provider. The network 114 may be implemented in a wireless fashion, e.g., using wireless protocols and technologies, such as WiFi, WiMax, etc. The network 114 can also be a packet-switched network such as a local area network, wide area network, metropolitan area network, Internet network, or other similar type of network environment. The network 114 may be a fixed wireless network, a wireless local area network (LAN), a wireless wide area network (WAN), a personal area network (PAN), a virtual private network (VPN), intranet or other suitable network system and includes equipment for receiving and transmitting signals.

If the processing system 201 is a PC, workstation, intelligent device or the like, software in the memory 210 may further include a basic input output system (BIOS) (omitted for simplicity). The BIOS is a set of essential software routines that initialize and test hardware at startup, start the OS 211, and support the transfer of data among the hardware devices. The BIOS is stored in ROM so that the BIOS can be executed when the processing system 201 is activated.

When the processing system 201 is in operation, the processing circuitry 205 is configured to execute software stored within the memory 210, to communicate data to and from the memory 210, and to generally control operations of the processing system 201 pursuant to the software. The control system framework 102, the OS 211, and applications 212 in whole or in part, but typically the latter, are read by the processing circuitry 205, perhaps buffered within the processing circuitry 205, and then executed.

When the systems and methods described herein are implemented in software, as is shown in FIG. 2, the methods can be stored on any computer readable medium, such as the local data storage system 118, for use by or in connection with any computer related system or method.

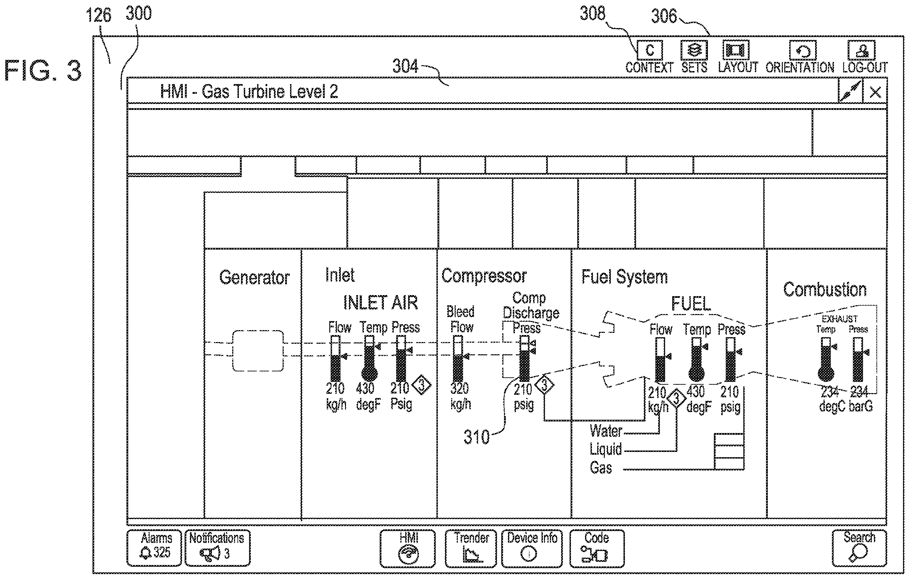

FIG. 3 depicts an example of an HMI window 304 of a user interface 300, which is interactively displayed on the multi-touch display 126 of FIG. 1. The example HMI window 304 of FIG. 3 is a human-machine interface for monitoring and controlling a gas turbine engine and various subsystems thereof, where the gas turbine engine is an example of the plant 106 of FIG. 1. Various elements depicted in FIG. 3 have properties and/or commands associated with them based on their current state or context. Contextual menus can provide a limited set of choices available in the current context of the view presented, such as actions related to the element or configurable parameters of the element.

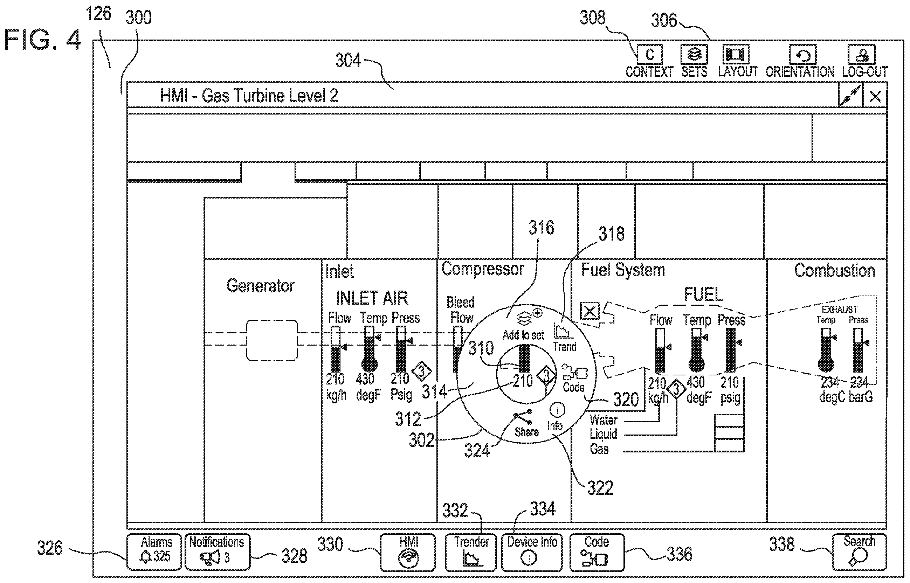

When a user desires to display, select, and/or edit contextual information or commands for a targeted element, the user makes a contextual menu display request as a touch-based command on the multi-touch display 126 thereby triggering pop-up display of a dynamic contextual touch menu 302 as depicted in FIG. 4. The contextual menu display request can be in the form of a particular gesture, such as a tap-and-hold or a letter "C" motion, for example. Alternatively, the contextual menu display request can be based on placement of a physical object 239 of FIG. 2 including one or more scannable code labels 242 on the multi-touch display 126 as previously described in reference to FIG. 2. As a further alternative, the contextual menu display request can be based on an icon as further described herein.

The example user interface 300 includes a palette of icons 306 as touch-sensitive options, such as work set navigation, layout/view change, orientation/display rotation, and logging in/out. The palette of icons 306 may also include a context icon 308. A user touches the context icon 308 and applies a dragging motion between the context icon 308 and a targeted element 310, resulting in displaying the dynamic contextual touch menu 302 on the multi-touch display 126. In the example of FIGS. 3 and 4, the targeted element 310 is a compressor pressure indicator for a gas turbine engine. Referring to FIG. 4, the dynamic contextual touch menu 302 can include a target area 312 that may appear as a circle to highlight the targeted element 310. The target area 312 can also act as a magnifier to increase the size of underlying graphical elements while maneuvering the dynamic contextual touch menu 302 on the user interface 300.

The dynamic contextual touch menu 302 is dynamic in that content 314 of the dynamic contextual touch menu 302 is customized to align with the targeted element 310, and the content 314 can be modified as the dynamic contextual touch menu 302 is maneuvered to align with different elements. Moving the dynamic contextual touch menu 302 between two elements that have different properties results in modifying the content 314 displayed by the dynamic contextual touch menu 302, as well as producing layout/formatting changes of the dynamic contextual touch menu 302. In the example of FIG. 4, the dynamic contextual touch menu 302 is in the shape of a circle with the targeted element 310 substantially centrally located below the dynamic contextual touch menu 302. In exemplary embodiments, once the dynamic contextual touch menu 302 is displayed on the multi-touch display 126, it is maintained and remains persistently displayed until a subsequent close action is detected on the multi-touch display 126. The close action can include a predetermined gesture or touch of a particular location, such as a close command (not depicted) on the dynamic contextual touch menu 302 itself.

Example content 314 of the dynamic contextual touch menu 302 of FIG. 4 includes an add to set command 316, a trend command 318, a code command 320, an information command 322, and a share command 324. In the context of exemplary embodiments, a set or work set is a group of views of tools managed together in the control system framework 102 of FIG. 1. The add to set command 316 can add the current view to a set. The trend command 318 may launch the trender 132 of FIG. 1 and include the targeted element 310 in a trend for charting and displaying associated information. The code command 320 may launch the code module 136 of FIG. 1. The information command 322 may launch the device information module 134 of FIG. 1, accessing the local and/or remote data storage systems 116 and 118 to provide information associated with the targeted element 310, such as general information/explanation, associated alarms, diagnostic information, maintenance information, device documentation, notes, and the like. The share command 324 may make data for the targeted element 310 and/or current view available for sharing with other users. Although, the example content 314 depicts a number of specific example commands, it will be understood that additional or fewer items can be included in the content 314.

The example user interface 300 of FIG. 4 further includes an alarms icon 326, a notifications icon 328, an HMI icon 330, a trender icon 332, a device info icon 334, a code icon 336, and a search icon 338. The icons 326-338 trigger associated actions in response to touch-based commands. For example, the alarms icon 326 may open an alarm viewer window (not depicted) to provide additional detail about alarm status and conditions. The notifications icon 328 may provide details about active notifications. The HMI icon 330 may launch the HMI 130 of FIG. 1, an example of which is the HMI window 304 of FIG. 4. The trender icon 332 may launch the trender 132 of FIG. 1. The device info icon 334 may launch the device information module 134 of FIG. 1. The code icon 336 may launch the code module 136 of FIG. 1. The search icon 338 may launch a search engine configured to search the local and/or remote data storage systems 116 and 118 for desired information.

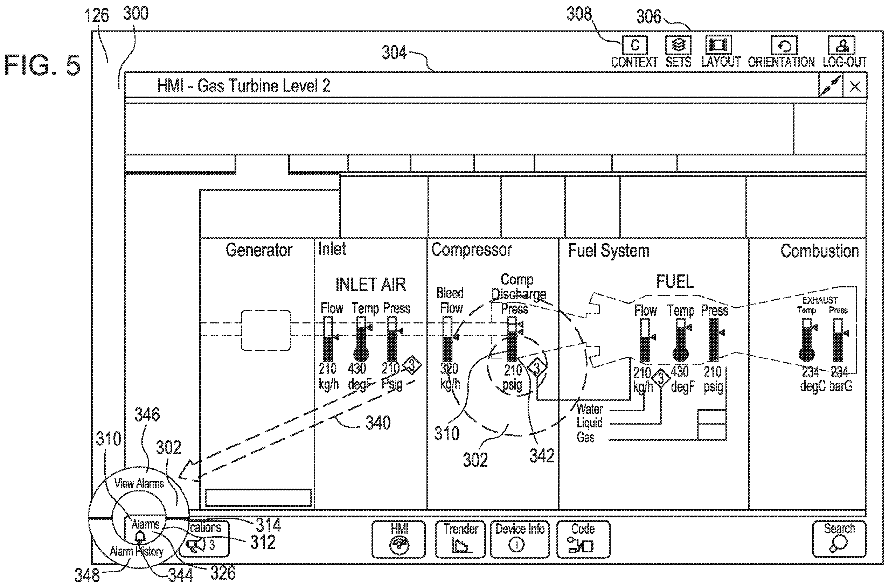

As previously described, the content 314 of the dynamic contextual touch menu 302 is modified as the dynamic contextual touch menu 302 is maneuvered to align with different elements. FIG. 5 depicts an example of a user applying a dragging motion 340 to the dynamic contextual touch menu 302 on the multi-touch display 126. The dynamic contextual touch menu 302 is modified from targeting a first element 342 as the targeted element 310 to targeting a second element 344 as the targeted element 310. In the example of FIG. 5, the first element 342 is a compressor pressure indicator for a gas turbine engine and the second element 344 is the alarms icon 326 which is visible in the target area 312 upon moving the dynamic contextual touch menu 302.

The content 314 of the dynamic contextual touch menu 302 is modified between FIGS. 4 and 5 to align with the second element 344 as the targeted element 310 in response to the dragging motion 340 detected on the multi-touch display 126 between the first and second elements 342 and 344. As can be seen in FIG. 5, the content 314 is modified to include a view alarms command 346 and an alarm history command 348 based on alignment of the dynamic contextual touch menu 302 with the alarms icon 326. The overall formatting and appearance of the dynamic contextual touch menu 302 may also change depending on where the dynamic contextual touch menu 302 is positioned on the user interface 300. The view alarms command 346 may open an alarm viewer window (not depicted) to provide alarm information and actions. The alarm history command 348 may open an alarm history window (not depicted) to display a time history of alarms. While FIG. 5 depicts one example of the dynamic contextual touch menu 302 associated with alarms, it will be understood that any number of additional or reduced command and/or status information can be included within the scope of various embodiments.

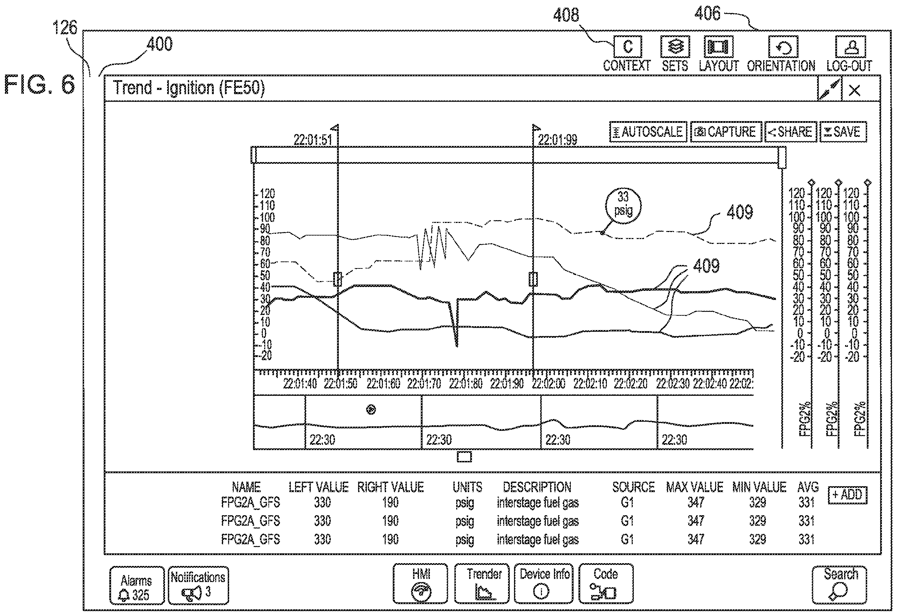

FIG. 6 depicts an example of a trend window 404 of a user interface 400, which is interactively displayed on the multi-touch display 126 of FIG. 1. The example trend window 404 depicts selected signals 409 associated with an ignition sequence of a gas turbine engine and various subsystems thereof, where the gas turbine engine is an example of the plant 106 of FIG. 1. Similar to the user interface 300 of FIGS. 3-5, the example user interface 400 of FIG. 6 includes a palette of icons 406 with a context icon 408; however, the context icon 408 can be omitted or located elsewhere in various embodiments.

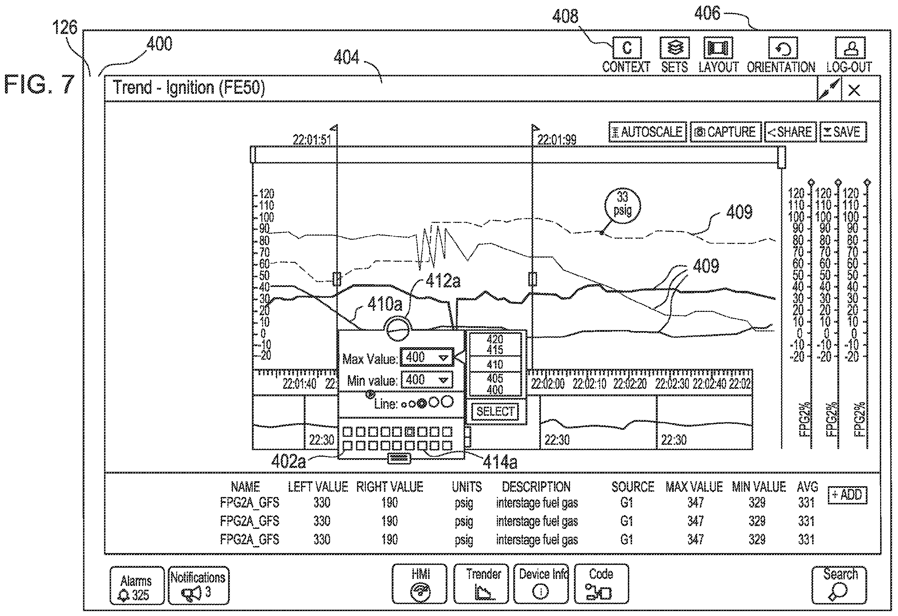

When a user desires to display, select, and/or edit contextual information or commands for a targeted element, the user makes a contextual menu display request as a touch-based command on the multi-touch display 126 thereby triggering pop-up display of a dynamic contextual touch menu. In response to a detected contextual menu display request, the example of FIG. 7 depicts the addition of a first dynamic contextual touch menu 402a including a target area 412a that aligns with a displayed trend signal as a targeted element 410a. Similar to the dynamic contextual touch menu 302 of FIGS. 4 and 5, the first dynamic contextual touch menu 402a is movable and can display different content 414a as the first dynamic contextual touch menu 402a is moved about on the user interface 400.

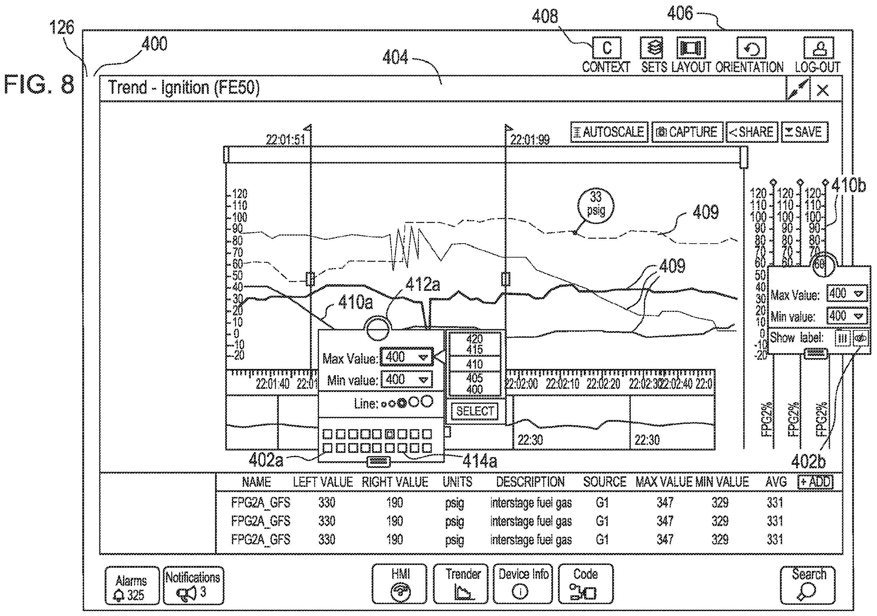

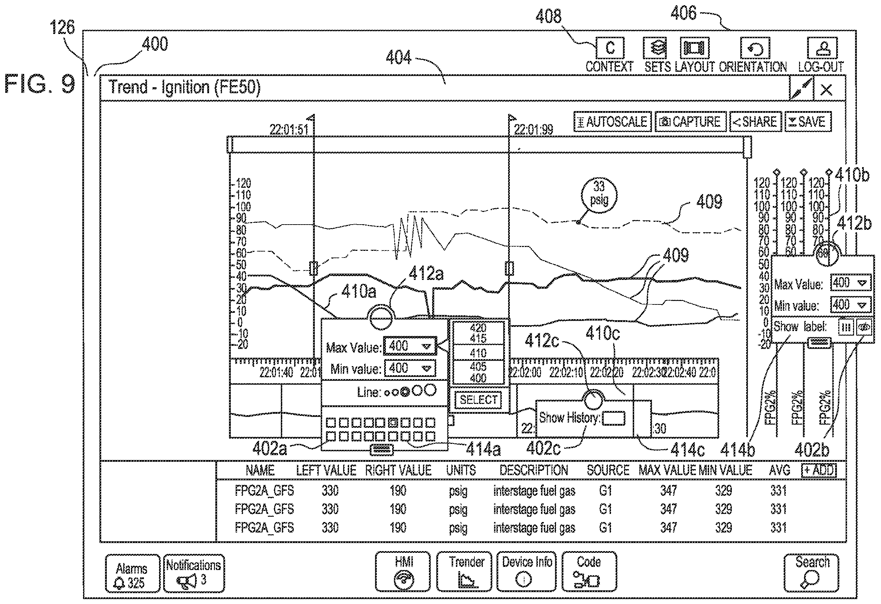

When a user desires to maintain the first dynamic contextual touch menu 402a and include additional dynamic contextual touch menus 402, the user can make one or more additional contextual menu display requests to open, for instance, a second dynamic contextual touch menu 402b as depicted in FIG. 8 and a third dynamic contextual touch menu 402c as depicted in FIG. 9. Each of the dynamic contextual touch menus 402a-402c is independently movable and can be positioned on any portion of the user interface 400. As each of the dynamic contextual touch menus 402a-402c is moved to align with a different targeted element 410, the respective content and formatting changes to align with the new targeted element.

In the example of FIG. 9, the first dynamic contextual touch menu 402a includes a target area 412a that aligns with a displayed trend signal as the targeted element 410a. The second dynamic contextual touch menu 402b includes a target area 412b that aligns with a signal percentage as a targeted element 410b. The third dynamic contextual touch menu 402c includes a target area 412c that aligns with a historical signal range as a targeted element 410c. Each of the dynamic contextual touch menus 402a-402c includes different content 414a-414c that is customized relative to respective targeted elements 410a-410c. The first and second dynamic contextual touch menus 402a and 402b are examples of dynamic contextual touch menus configured as property editors to modify one or more property values of the targeted elements 410a and 410b. In contrast, the content 414c of the third dynamic contextual touch menu 402c only includes a command for showing history at a location aligned with the target area 412c.

As an individual dynamic contextual touch menu 402 is dragged across the trend window 404, it is modified based on the underlying targeted element 410 such that it may appear as the first dynamic contextual touch menu 402a at targeted element 410a, as the second dynamic contextual touch menu 402b at targeted element 410b, and as the third dynamic contextual touch menu 402c at targeted element 410c. As one example, the first dynamic contextual touch menu 402a can adjust thickness and color of one of the selected signals 409, and then be dragged over a different signal line to change that line's thickness. Other variations of content and formatting of each dynamic contextual touch menu 402 can exist in other locations. Other examples can include circularly formatted dynamic contextual touch menus similar to FIGS. 4 and 5 and/or pop-up tables of values for larger data sets (not depicted). As in FIGS. 4 and 5, the various dynamic contextual touch menus 402a-402c can be maintained persistently on the user interface 400 until a specific close action is detected. A close action can be targeted individually to each of the dynamic contextual touch menus 402a-402c or collectively to all of the dynamic contextual touch menus 402a-402c.

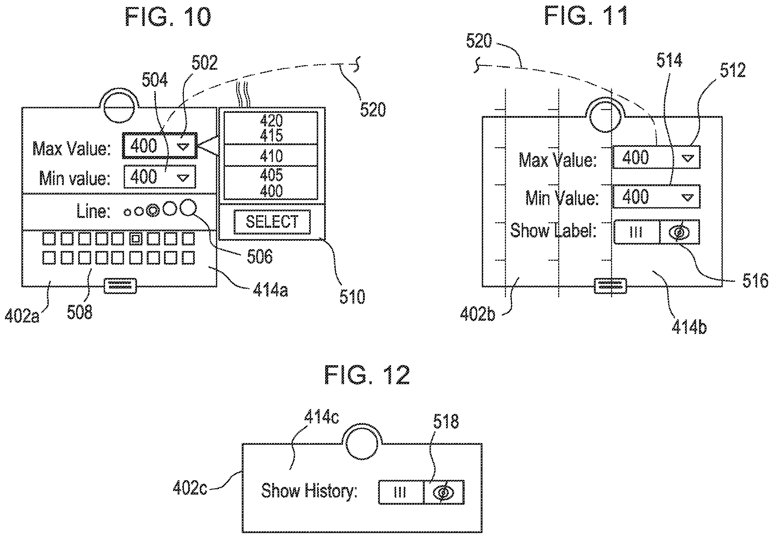

FIGS. 10, 11, and 12 depict detailed views of the dynamic contextual touch menus 402a-402c of FIGS. 7-9. The content 414a of the dynamic contextual touch menu 402a of FIG. 10 includes a configurable maximum value 502, a configurable minimum value 504, a line thickness selector 506, and a color selection palette 508. Touch-based selection of the configurable maximum value 502 or minimum value 504 may open a secondary input selection window 510 to scroll through and select a specific value. Additional progressively revealed options can also be supported. Similarly, the content 414b of the dynamic contextual touch menu 402b of FIG. 11 also includes a configurable maximum value 512 and a configurable minimum value 514. Additionally, the dynamic contextual touch menu 402b includes a show label command 516. The content 414c of the dynamic contextual touch menu 402c of FIG. 12 includes a show history command 518.

The dynamic contextual touch menus 402a and 402b may also support updating of parameters by copying values between the dynamic contextual touch menus 402a and 402b. For example, the configurable maximum value 502 of the dynamic contextual touch menu 402a can be copied to the configurable maximum value 512 of the dynamic contextual touch menu 402b using a copying motion by touching the configurable maximum value 502 and applying a dragging motion 520 over to the configurable maximum value 512.

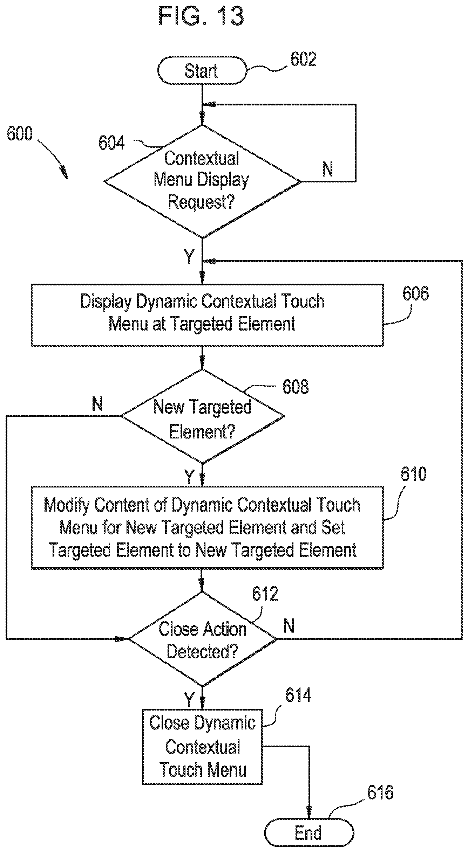

FIG. 13 depicts a process 600 for providing dynamic contextual touch menus in accordance with exemplary embodiments. The process 600 is described in reference to FIGS. 1-13. The process 600 begins at block 602 and transitions to block 604. At block 604, the processing circuitry 205 of FIG. 2 determines whether a contextual menu display request is detected in response to a touch detected on the multi-touch display 126. The contextual menu display request can be a finger-based or other physical object touch. As previously described, the contextual menu display request can be identified in response to detecting dragging of an icon from a palette of icons, such as the context icon 308, 408 from the pallet of icons 306, 406 of FIGS. 3-5, 6-9 on the multi-touch display 126. Alternatively, the contextual menu display request can be detected by placement of a physical object 239 including one or more scannable code labels 242 on the multi-touch display 126. Block 604 continues until a contextual menu display request is detected.

At block 606, after a contextual menu display request is detected at block 604, a dynamic contextual touch menu, such as the dynamic contextual touch menu 302 or 402a-402c, at a targeted element is displayed on the multi-touch display 126. As illustrated in the example of FIGS. 4 and 5, the dynamic contextual touch menu 302 associated with the first element 342 as the targeted element 310 can be displayed in response to detecting the contextual menu display request. The dynamic contextual touch menu can include a target area, such as target area 312 of the dynamic contextual touch menu 302 in FIGS. 4 and 5, where the content 314 displayed by the dynamic contextual touch menu 302 is based on alignment of the target area 312 with the targeted element 310 on the multi-touch display 126.

At block 608, the processing circuitry 205 determines whether there is a new targeted element based on input from the multi-touch display 126. For example, the processing circuitry 205 can detect a motion on the multi-touch display 126, the dragging motion 340 of FIG. 5 of the dynamic contextual touch menu 302 between the first and second elements 342 and 344. If a new targeted element is detected, the process 600 continues to block 610; otherwise, the process 600 may skip to block 612.

At block 610, based on detecting a new targeted element in block 608, the processing circuitry 205 modifies the content of the dynamic contextual touch menu, such as content 314 of the dynamic contextual touch menu 302 of FIG. 5. The targeted element is set to the new targeted element, for example, the targeted element 310 changes from the first element 342 to the second element 344 of FIG. 5. The dynamic contextual touch menu 302 on the multi-touch display 126 is maintained persistently until a subsequent close action is detected on the multi-touch display 126.

At block 612, the processing circuitry 205 determines whether a close action is detected. In the example of FIG. 5, the close action can be a command integrated into the dynamic contextual touch menu 302, located elsewhere on the user interface 300, or be a particular gesture on the multi-touch display 126. If a close action is detected at block 612, then the dynamic contextual touch menu, such as the dynamic contextual touch menu 302, is closed and the process 600 ends at block 616. If the close action is not detected at block 612, the process 600 may return to block 606 to display the dynamic contextual touch menu.

Multiple instances of the process 600 can operate in parallel such that additional dynamic contextual touch menus can be displayed on the multi-touch display 126 contemporaneously in response to detecting additional contextual menu display requests. An example of this is depicted in FIG. 9 as previously described. Additionally, where at least two of the dynamic contextual touch menus are configured as property editors supporting modification of one or more property values of associated targeted elements, the processing circuitry 205 can support copying of a value between a pair of the dynamic contextual touch menus, such as the dynamic contextual touch menus 402a and 402b, in response to detecting a copy motion on the multi-touch display 126 as previously described in reference to FIGS. 10-12.

A technical effect is modifying contents of a dynamic contextual touch menu to align with a targeted element as the dynamic contextual touch menu is moved between elements. Modification of the dynamic contextual touch menu presents relevant information and/or commands based on a targeted element. Support for simultaneous display of multiple dynamic contextual touch menus enables copying of values between the dynamic contextual touch menus.

As will be appreciated by one skilled in the art, aspects of the present invention may be embodied as a system or a method. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer readable medium(s) having computer readable program code embodied thereon.

Any combination of one or more computer readable medium(s) may be utilized including a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contains, or stores a program for use by or in connection with an instruction execution system, apparatus, or device.

Program code embodied on a computer readable medium as a non-transitory computer program product may be transmitted using any appropriate medium, including but not limited to wireless, wireline, optical fiber cable, RF, etc., or any suitable combination of the foregoing.

Computer program code for carrying out operations for aspects of the present invention may be written in any combination of one or more programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects are described with reference to flowchart illustrations and/or block diagrams of methods, apparatus (systems) and computer program products according to embodiments. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the Figures illustrate the architecture, functionality, and operation of possible implementations of systems, methods and computer program products according to various embodiments. In this regard, each block in the flowchart or block diagrams may represent a module, segment, or portion of code, which includes one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

In exemplary embodiments, where the control system framework 102 of FIG. 1 is implemented in hardware, the methods described herein can implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

While the invention has been described in detail in connection with only a limited number of embodiments, it should be readily understood that the invention is not limited to such disclosed embodiments. Additionally, while various embodiments have been described, it is to be understood that aspects may include only some of the described embodiments. Accordingly, the invention is not to be seen as limited by the foregoing description, but is only limited by the scope of the appended claims.

## Claims

1. A system (100, 200) for providing a dynamic contextual touch menu, the system (100, 200) comprising:
a multi-touch display (126); and
processing circuitry (205) coupled to the multi-touch display (126), the processing circuitry (205) configured to:
detect a contextual menu display request in response to a touch detected on the multi-touch display (126);
display a dynamic contextual touch menu (302) associated with a first element (342) as a targeted element (310) in response to the detected contextual menu display request; wherein the dynamic contextual touch menu (302) further comprises a target area (312), and the content displayed by the dynamic contextual touch menu (302) is based on alignment of the target area (312) with the targeted element (310) on the multi-touch display (126);
wherein the dynamic contextual touch menu (302) remains persistently on the multi-touch display (126) until a subsequent close action is detected on the multi-touch display (126);
detect a dragging motion of the dynamic contextual touch menu (302) between the first element (342) and a second element (344) on the multi-touch display (126); **characterized by** being further configured to modify content of the dynamic contextual touch menu (302) based on alignment of the target area (312) with the second element (344) as the targeted element (310) in response to the detected dragging motion on the multi-touch display (126) between the first and second elements (342, 344) to present information and/or commands based on the second element (344), wherein the processing circuitry (205) is further configured to display additional dynamic contextual touch menus (302) contemporaneously in response to detection of additional contextual menu display requests.

2. The system (100, 200) according to claim 1, wherein the dynamic contextual touch menu (302) further comprises a property editor configured to modify one or more property values of the targeted element (310).

3. The system (100, 200) according to claim 1, wherein the contextual menu display request is detected in response to an icon dragged from a palette of icons on the multi-touch display (126).

4. The system (100, 200) according to claim 1, wherein the targeted element (310) is an element within a control system framework (102), which, in particular, interfaces with a plurality of control subsystems (104) each of which controls a plant (106) through a combination of sensors (108) and actuators (110).

5. A method for providing a dynamic contextual touch menu (302), the method comprising:
detecting, by processing circuitry (205) coupled to a multi-touch display (126), a contextual menu display request in response to a touch detected on the multi-touch display (126);
displaying on the multi-touch display (126) a dynamic contextual touch menu (302) associated with a first element (342) as a targeted element (310) in response to detecting the contextual menu display request; wherein the dynamic contextual touch menu (302) further comprises a target area (312), and the content displayed by the dynamic contextual touch menu (302) is based on alignment of the target area (312) with the targeted element (310) on the multi-touch display (126);
letting the dynamic contextual touch menu (302) persistently remain on the multi-touch display (126) until a subsequent close action is detected on the multi-touch display (126);
detecting, by the processing circuitry (205), a dragging motion of the dynamic contextual touch menu (302) between the first element (342) and a second element (344) on the multi-touch display (126); **characterized by**
modifying, by the processing circuitry (205), content of the dynamic contextual touch menu (302) based on alignment of the target area (312) with the second element (344) as the targeted element (310) in response to the detected dragging motion on the multi-touch display (126) between the first and second elements (342, 344) to present information and/or commands based on the second element (344), and displaying, by the processing circuitry (205),
additional dynamic contextual touch menus (302) on the multi-touch display (126) contemporaneously in response to detecting additional contextual menu display requests.

6. The method according to claim 5, wherein
the targeted element (310) is an element within a control system framework (102), which interfaces with a plurality of control subsystems (104) each of which controls a plant (106) through a combination of sensors (108) and actuators (110).

7. The method according to claim 5 or 6, further comprising:
aligning the dynamic contextual touch menu (302) with the targeted element (310) by moving the dynamic contextual touch menu (302), modifying a content (314) displayed by the dynamic contextual touch menu (302), and/or by producing layout/formatting changes of the dynamic contextual touch menu (302).

8. The method according to claim 5, 6 or 7, wherein the dynamic contextual touch menu (302) further comprises a property editor configured to modify one or more property values of the targeted element (310).

9. A computer program product for providing a dynamic contextual touch menu (302), the computer program product including a non-transitory computer readable medium storing instructions for causing processing circuitry (205) coupled to a multi-touch display (126) to implement a method according to one of the claims 5 to 8.

## Patentansprüche

1. System (100, 200) zum Bereitstellen eines dynamischen kontextbezogenen Touch-Menüs, wobei das System (100, 200) umfasst:
ein Multi-Touch-Display (126); und
eine Verarbeitungsschaltung (205), die mit dem Multi-Touch-Display (126) gekoppelt ist, wobei die Verarbeitungsschaltung (205) konfiguriert ist zum:
Erkennen einer kontextbezogenen Menüanzeigeanforderung als Reaktion auf eine Berührung, die auf dem Multi-Touch-Display (126) erkannt wird;
Anzeigen eines dynamischen kontextbezogenen Touch-Menüs (302), das einem ersten Element (342) als Reaktion auf die erkannte kontextbezogene Menüanzeigeanforderung als Zielelement (310) zugeordnet ist; wobei das dynamische kontextbezogene Touch-Menü (302) ferner einen Zielbereich (312) umfasst, und der durch das dynamische kontextbezogene Touch-Menü (302) angezeigte Inhalt auf der Ausrichtung des Zielbereichs (312) an dem Zielelement (310) auf dem Multi-Touch-Display (126) basiert;
wobei das dynamische kontextbezogene Touch-Menü (302) dauerhaft auf dem Multi-Touch-Display (126) verbleibt, bis eine nachfolgende Schließaktion auf dem Multi-Touch-Display (126) erkannt wird;
Erkennen einer Ziehbewegung des dynamischen kontextbezogenen Touch-Menüs (302) zwischen dem ersten Element (342) und einem zweiten Element (344) auf dem Multi-Touch-Display (126); **dadurch gekennzeichnet, dass** es ferner dazu konfiguriert ist, den Inhalt des dynamischen kontextbezogenen Touch-Menüs (302) basierend auf der Ausrichtung des Zielbereichs (312) an dem zweiten Element (344) als Zielelement (310) als Reaktion auf die erkannte Ziehbewegung auf dem Multi-Touch-Display (126) zwischen dem ersten und zweiten Element (342, 344) zu ändern, um Informationen und/oder Befehle basierend auf dem zweiten Element (344) darzustellen, wobei die Verarbeitungsschaltung (205) ferner dazu konfiguriert ist, zusätzliche dynamische kontextbezogene Touch-Menüs (302) gleichzeitig als Reaktion auf das Erkennen zusätzlicher kontextbezogener Menüanzeigeanforderungen anzuzeigen.

2. System (100, 200) nach Anspruch 1, wobei das dynamische kontextbezogene Touch-Menü (302) ferner einen Eigenschaftseditor umfasst, der dazu konfiguriert ist, einen oder mehrere Eigenschaftswerte des Zielelements (310) zu ändern.

3. System (100, 200) nach Anspruch 1, wobei die kontextbezogene Menüanzeigeanforderung als Reaktion auf ein Symbol erkannt wird, das aus einer Palette von Symbolen auf das Multi-Touch-Display (126) gezogen wird.

4. System (100, 200) nach Anspruch 1, wobei das Zielelement (310) ein Element innerhalb eines Steuerungssystemrahmens (102) ist, der insbesondere mit einer Vielzahl von Steuerungsteilsystemen (104) verbunden ist, von denen jedes eine Anlage (106) durch eine Kombination von Sensoren (108) und Stellelementen (110) steuert.

5. Verfahren zum Bereitstellen eines dynamischen kontextbezogenen Touch-Menüs (302), wobei das Verfahren umfasst:
Erkennen einer kontextbezogenen Menüanzeigeanforderung als Reaktion auf eine Berührung, die auf dem Multi-Touch-Display (126) erkannt wird, durch eine Verarbeitungsschaltung (205), die mit einem Multi-Touch-Display (126) gekoppelt ist;
Anzeigen eines dynamischen kontextbezogenen Touch-Menüs (302) auf dem Multi-Touch-Display (126), das einem ersten Element (342) als Reaktion auf das Erkennen der kontextbezogene Menüanzeigeanforderung als Zielelement (310) zugeordnet ist; wobei das dynamische kontextbezogene Touch-Menü (302) ferner einen Zielbereich (312) umfasst und der durch das dynamische kontextbezogene Touch-Menü (302) angezeigte Inhalt auf der Ausrichtung des Zielbereichs (312) an dem Zielelement (310) auf dem Multi-Touch-Display (126) basiert;
dauerhaftes Belassen des dynamischen kontextbezogenen Touch-Menüs (302) auf dem Multi-Touch-Display (126), bis eine nachfolgende Schließaktion auf dem Multi-Touch-Display (126) erkannt wird;
Erkennen einer Ziehbewegung des dynamischen kontextbezogenen Touch-Menüs (302) zwischen dem ersten Element (342) und einem zweiten Element (344) auf dem Multi-Touch-Display (126) durch die Verarbeitungsschaltung (205); **gekennzeichnet durch**
Ändern des Inhalts des dynamischen kontextbezogenen Touch-Menüs (302) durch die Verarbeitungsschaltung (205), basierend auf der Ausrichtung des Zielbereichs (312) an dem zweiten Element (344) als Zielelement (310) als Reaktion auf die erkannte Ziehbewegung auf dem Multi-Touch-Display (126) zwischen dem ersten und zweiten Element (342, 344), um Informationen und/oder Befehle basierend auf dem zweiten Element (344) darzustellen, die durch die Verarbeitungsschaltung (205) angezeigt werden,
Hinzufügen dynamischer kontextbezogener Touch-Menüs (302) auf dem Multi-Touch-Display (126) gleichzeitig als Reaktion auf das Erkennen zusätzlicher kontextbezogener Menüanzeigeanforderungen.

6. Verfahren nach Anspruch 5, wobei
das Zielelement (310) ein Element innerhalb eines Steuerungssystemrahmens (102) ist, der mit einer Vielzahl von Steuerungsteilsystemen (104) verbunden ist, von denen jedes eine Anlage (106) durch eine Kombination von Sensoren (108) und Stellelementen (110) steuert.

7. Verfahren nach Anspruch 5 oder 6, ferner umfassend:
Ausrichten des dynamischen kontextbezogenen Touch-Menüs (302) an dem Zielelement (310) durch Bewegen des dynamischen kontextbezogenen Touch-Menüs (302), Ändern eines Inhalts (314), der durch das dynamische kontextbezogene Touch-Menü (302) angezeigt wird, und/oder durch Erzeugen von Layout-/Formatänderungen des dynamischen kontextbezogenen Touch-Menüs (302).

8. Verfahren nach Anspruch 5, 6 oder 7, wobei das dynamische kontextbezogene Touch-Menü (302) ferner einen Eigenschaftseditor umfasst, der dazu konfiguriert ist, einen oder mehrere Eigenschaftswerte des Zielelements (310) zu ändern.

9. Computerprogrammprodukt zum Bereitstellen eines dynamischen kontextbezogenen Touch-Menüs (302), wobei das Computerprogrammprodukt ein nichtflüchtiges, computerlesbares Medium einschließt, das Anweisungen speichert, um eine mit einem Multi-Touch-Display (126) gekoppelte Verarbeitungsschaltung (205) zu veranlassen, ein Verfahren nach einem der Ansprüche 5 bis 8 zu implementieren.

## Revendications

1. Système (100, 200) pour fournir un menu tactile contextuel dynamique, le système (100, 200) comprenant :
un affichage tactile multipoint (126) ; et
un circuit de traitement (205) couplé à l'affichage tactile multipoint (126), le circuit de traitement (205) configuré pour :
détecter une demande d'affichage de menu contextuel en réponse à un contact tactile détecté sur l'affichage tactile multipoint (126) ;
l'affichage d'un menu tactile contextuel dynamique (302) associé à un premier élément (342) en tant qu'élément ciblé (310) en réponse à la demande d'affichage de menu contextuel détectée ; dans lequel le menu tactile contextuel dynamique (302) comprend en outre une zone cible (312), et le contenu affiché par le menu tactile contextuel dynamique (302) est basé sur un alignement de la zone cible (312) avec l'élément ciblé (310) sur l'affichage tactile multipoint (126) ;
dans lequel le menu tactile contextuel dynamique (302) demeure de façon persistante sur l'affichage tactile multipoint (126) jusqu'à ce qu'une action de fermeture ultérieure soit détectée sur l'affichage tactile multipoint (126) ;
détecter un mouvement de glissement du menu tactile contextuel dynamique (302) entre le premier élément (342) et un deuxième élément (344) sur l'affichage tactile multipoint (126) ; **caractérisé en ce qu'il** est configuré en outre pour modifier un contenu du menu tactile contextuel dynamique (302) sur la base d'un alignement de la zone cible (312) avec le deuxième élément (344) en guise d'élément ciblé (310) en réponse au mouvement de glissement détecté sur l'affichage tactile multipoint (126) entre les premier et deuxième éléments (342, 344) pour présenter des informations et/ou des commandes basées sur le deuxième élément (344), dans lequel le circuit de traitement (205) est en outre configuré pour afficher des menus tactiles contextuels dynamiques supplémentaires (302) simultanément en réponse à la détection de demandes supplémentaires d'affichage de menu contextuel.

2. Système (100, 200) selon la revendication 1, dans lequel le menu tactile contextuel dynamique (302) comprend en outre un éditeur de propriétés configuré pour modifier une ou plusieurs valeurs de propriété de l'élément ciblé (310).

3. Système (100, 200) selon la revendication 1, dans lequel la demande d'affichage de menu contextuel est détectée en réponse à une icône que l'on a fait glisser depuis une palette d'icônes sur l'affichage tactile multipoint (126).

4. Système (100, 200) selon la revendication 1, dans lequel l'élément ciblé (310) est un élément au sein d'une structure de système de commande (102), qui, en particulier, assure l'interface avec une pluralité de sous-systèmes de commande (104) dont chacun commande une installation (106) par l'intermédiaire d'une combinaison de capteurs (108) et d'actionneurs (110).

5. Procédé pour fournir un menu tactile contextuel dynamique (302), le procédé comprenant :
la détection, par un circuit de traitement (205) couplé à un affichage tactile multipoint (126), d'une demande d'affichage de menu contextuel en réponse à un contact tactile détecté sur l'affichage tactile multipoint (126) ;
l'affichage sur l'affichage tactile multipoint (126) d'un menu tactile contextuel dynamique (302) associé à un premier élément (342) en tant qu'élément ciblé (310) en réponse à la détection de la demande d'affichage de menu contextuel ; dans lequel le menu tactile contextuel dynamique (302) comprend en outre une zone cible (312), et le contenu affiché par le menu tactile contextuel dynamique (302) est basé sur un alignement de la zone cible (312) avec l'élément ciblé (310) sur l'affichage tactile multipoint (126) ;
le fait de laisser le menu tactile contextuel dynamique (302) demeurer de façon persistante sur l'affichage tactile multipoint (126) jusqu'à ce qu'une action de fermeture ultérieure soit détectée sur l'affichage tactile multipoint (126) ;
la détection, par le circuit de traitement (205), d'un mouvement de glissement du menu tactile contextuel dynamique (302) entre le premier élément (342) et un deuxième élément (344) sur l'affichage tactile multipoint (126) ; **caractérisé par**
la modification, par le circuit de traitement (205), du contenu du menu tactile contextuel dynamique (302) sur la base d'un alignement de la zone cible (312) avec le deuxième élément (344) en guise d'élément ciblé (310) en réponse au mouvement de glissement détecté sur l'affichage tactile multipoint (126) entre les premier et deuxième éléments (342, 344) pour présenter des informations et/ou des commandes basées sur le deuxième élément (344), et l'affichage par le circuit de traitement (205),
de menus tactiles contextuels dynamiques supplémentaires (302) sur l'affichage tactile multipoint (126) simultanément en réponse à la détection de demandes supplémentaires d'affichage de menu contextuel.

6. Procédé selon la revendication 5, dans lequel
l'élément ciblé (310) est un élément au sein d'une structure de système de commande (102), qui assure l'interface avec une pluralité de sous-systèmes de commande (104) dont chacun commande une installation (106) par l'intermédiaire d'une combinaison de capteurs (108) et d'actionneurs (110).

7. Procédé selon la revendication 5 ou 6, comprenant en outre :
l'alignement du menu tactile contextuel dynamique (302) avec l'élément ciblé (310) en déplaçant le menu tactile contextuel dynamique (302), modifiant un contenu (314) affiché par le menu tactile contextuel dynamique (302), et/ou en produisant des changements de disposition/formatage du menu tactile contextuel dynamique (302).

8. Procédé selon la revendication 5, 6 ou 7, dans lequel le menu tactile contextuel dynamique (302) comprend en outre un éditeur de propriétés configuré pour modifier une ou plusieurs valeurs de propriété de l'élément ciblé (310).

9. Produit programme informatique pour fournir un menu tactile contextuel dynamique (302), le produit programme informatique incluant un support non transitoire lisible par un ordinateur stockant des instructions pour amener un circuit de traitement (205) couplé à un affichage tactile multipoint (126) à implémenter un procédé selon l'une des revendications 5 à 8.
